# EUROPÄISCHE PATENTSCHRIFT

(11) **EP 1 630 370 B1**
(45) Veröffentlichungstag und Bekanntmachung des Hinweises auf die Patenterteilung: **13.09.2006**
(21) Anmeldenummer: 05106977.1
(22) Anmeldetag: 28.07.2005
(51) Int. Cl.: F01N 7/00, F16K 1/22

(54) **Abgasklappengehäuse sowie Abgasklappeneinrichtung**
Exhaust gas flap housing and exhaust gas flap device
Boîtier de volet de gaz d'échappement et dispositif de volet de gaz d'échappement

(30) Priorität: 24.08.2004 DE 102004040821
(43) Veröffentlichungstag der Anmeldung: 01.03.2006
(73) Patentinhaber: Pierburg GmbH, 41460 Neuss (DE)
(72) Erfinder: Gerards, Hans, 52538, Gangelt (DE); Wagner, Tobias, 97355 Castell (DE); Chassée, Stephan, 41464, Neuss (DE)
(74) Vertreter: von Kirschbaum, Alexander

(56) Entgegenhaltungen:
- DE-A1- 19 526 144
- US-A- 3 788 072
- US-A- 4 936 287
- US-A1- 2002 195 140
- US-A1- 2003 192 606

## Beschreibung

Die Erfindung betrifft ein Abgasklappengehäuse sowie eine Abgasklappeneinrichtung mit einem Abgasklappengehäuse, in dem eine Abgasklappe angeordnet ist.

Insbesondere bei großvolumigen Kraftfahrzeugmotoren mit beispielsweise sechs, acht oder mehr Zylindern ist es zur Einsparung von Kraftstoff bekannt, einzelne Zylinder abzuschalten. Um in dem Abgasstrang trotz einzelner abgeschalteter Zylinder einen ausreichenden Gegendruck zu gewährleisten, sind in einzelnen Abgasrohren Abgasklappen angeordnet. Derartige Abgasklappeneinrichtungen weisen ein Gehäuse auf, in dem die Abgasklappe angeordnet ist. Bei dem Gehäuse handelt es sich um ein rohrförmiges Gehäuse oder auch einen Teil eines Abgasrohres, so dass die Abgasklappe unmittelbar in das Abgasrohr eingebaut ist. Die Abgasklappe ist mit einer Klappenwelle verbunden, die über mindestens ein Lagerelement in dem Gehäuse schwenkbar gelagert ist. Um die Schwenkbewegung der Abgasklappe zu begrenzen, ist mindestens ein Anschlagelement vorgesehen, durch das zumindest eine Endposition, beispielsweise die Offen-Position oder die Geschlossen-Position, begrenzt ist. Als Anschlagelemente werden gesonderte Bauteile eingesetzt, die üblicherweise durch spanende Bearbeitung hergestellt sind und sodann beispielsweise an der Innenseite des Abgasklappengehäuses befestigt werden. An dem Anschlagelement liegt in einer Endposition sodann die Abgasklappe an. Da die exakte Definition der Endpositionen sehr wichtig ist, ist ein exakter Einbau der Anschlagelemente erforderlich.

Aus US 3,788,072 ist ein Klappengehäuse bekannt, bei dem ein Anschlagelement durch Umformen der Gehäusewand vorgesehen ist.

Aufgabe der Erfindung ist es, ein Abgasklappengehäuse zu schaffen, bei dem in definierter Lage auf einfache Weise ein Anschlagelement vorgesehen ist.

Die Lösung der Aufgabe erfolgt erfindungsgemäß durch die Merkmale des Anspruchs 1.

Erfindungsgemäß ist das Anschlagelement durch Umformen des Abgasklappengehäuses hergestellt und somit Bestandteil des Gehäuses. Beispielsweise wird das Anschlagelement dadurch hergestellt, dass in dem Gehäuse ein U-förmiger Schnitt oder eine entsprechende Ausstanzung eingebracht wird und das Anschlagelement entsprechend einer Lasche ins Gehäuseinnere gebogen wird. Da diese Art der Herstellung des Anschlagelementes sehr exakt erfolgen kann und die Lage exakt definiert ist, kann mit sehr engen Toleranzen gewährleistet sein, dass die gewünschte Lage des Anschlagelementes realisiert ist. Eine Nachbearbeitung ist nicht oder nur in sehr geringem Maße erforderlich. Insbesondere weist das erfindungsgemäße Herstellen des Anschlagelementes durch Umformen des Abgasklappengehäuses den Vorteil auf, dass kein gesondertes Anschlagelement in einer exakten Lage mit dem Abgasklappengehäuse verbunden werden muss.

Erfindungsgemäß ist das Anschlagelement im Bereich einer Durchgangsöffnung zur Durchführung einer Klappenwelle vorgesehen. Insbesondere erfolgt das Herstellen der Durchgangsöffnung beispielsweise durch Ausstanzen gemeinsam mit dem Herstellen des beispielsweise U-förmigen Schlitzes, um ein anschließendes Umbiegen und Herstellen des Anschlagelementes in einem Arbeitsschritt zu ermöglichen. Dies hat den Vorteil, dass die Position des Anschlagelementes bezogen auf die Durchgangsöffnung definiert ist. Vorzugsweise sind zwei Anschlagelemente vorgesehen, die auf einander gegenüberliegenden Seiten der Durchgangsöffnung angeordnet sind.

Das Anschlagelement ist vorzugsweise einstückig mit dem Gehäuse über einen Verbindungssteg verbunden.

Um das Abgasklappengehäuse auf einfache Weise mit einem Abgasstrang verbinden zu können, ist das Abgasklappengehäuse vorzugsweise rohrförmig ausgebildet und weist an den gegenüberliegenden Enden einen Außendurchmesser auf, der dem Innendurchmesser des Abgasstrangs entspricht oder einem Innendurchmesser, der dem Außendurchmesser des Abgasstrang entspricht. Insbesondere können die beiden Enden des rohrförmigen Abgasklappengehäuses unterschiedlich ausgestaltet sein.

Ferner betrifft die Erfindung eine Abgasklappeneinrichtung mit einem Abgasklappengehäuse, das wie vorstehend beschrieben erfindungsgemäß ausgebildet ist. In dem Gehäuse ist eine Abgasklappe angeordnet. Die Abgasklappe ist mit einer Klappenwelle verbunden, die in mindestens einem mit dem Gehäuse verbundenen Lagerelement, bei dem es sich insbesondere um ein Gleitlager oder ein Wälzlager handelt, gelagert ist.

Das Abgasklappengehäuse der Abgasklappeneinrichtung ist, wie vorstehend beschrieben, bevorzugt weitergebildet.

Nachfolgend wird die Erfindung an Hand einer bevorzugten Ausführungsform unter Bezugnahme auf die anliegenden Zeichnungen näher erläutert.

Es zeigen:

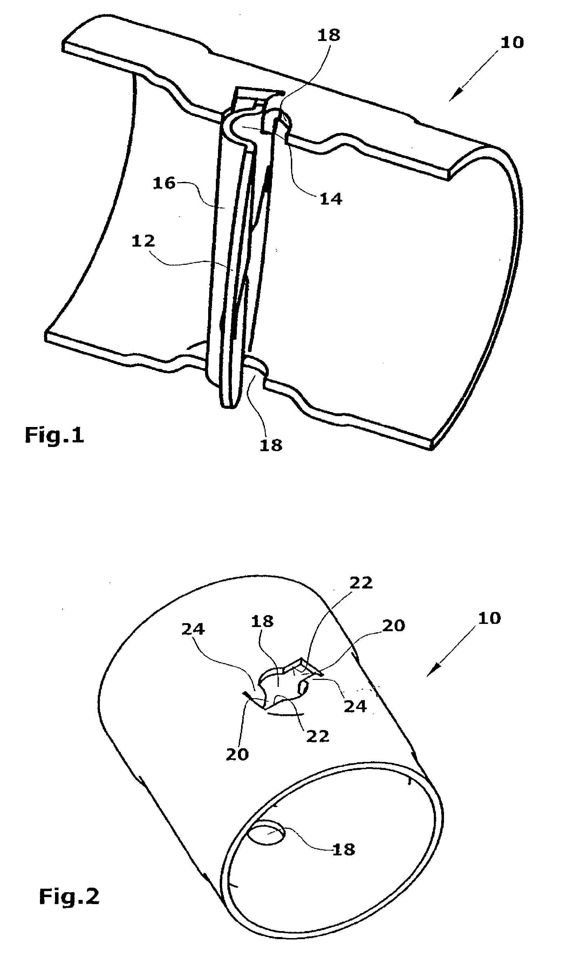

- Fig. 1:: eine schematische perspektivische teilweise geschnittene Ansicht einer Abgasklappeneinrichtung und
- Fig. 2:: eine schematische perspektivische Ansicht eines Abgasklappengehäuses.

In einem rohrförmigen Abgasklappengehäuse 10 ist eine Abgasklappe 12 angeordnet, die halbkreisförmige Ausnehmungen 14 bzw, halbringförmige Ansätze 16 zur Aufnahme einer Klappenwelle aufweist. Die Klappenwelle verläuft durch die Ausnehmungen 14 und durch ringförmige Durchbrüche 18, die in dem Abgasklappengehäuse 10 vorgesehen sind.

Unmittelbar angrenzend an eine der beiden Durchgangsöffnungen sind einander gegenüberliegend zwei Anschlagelemente 20 vorgesehen. Die Anschlagelemente 20 sind einstückig mit dem Abgasklappengehäuse 10 verbunden und durch Umformen hergestellt. Hierzu ist in das Abgasklappengehäuse jeweils ein U-förmiger Schlitz 22 eingestanzt. Hierdurch sind zwei im Wesentlichen rechteckförmige Anschlagelemente ausgebildet, die über Verbindungsstege 24 mit dem Abgasklappengehäuse 10 verbunden bleibe. Durch Umformen bzw. Umbiegen der Ansätze ins Innere des Abgasklappengehäuses 10 werden die beiden Anschläge 20 ausgebildet. Hierbei sind die beiden Anschläge 20 bezogen auf die Durchgangsöffnung 18 einander gegenüberliegend angeordnet . Ferner sind die Verbindungsstege 24 auf einander gegenüberliegenden Seiten vorgesehen.

## Patentansprüche

1. Abgasklappengehäuse mit
mindestens einem Anschlagelement (20) für eine Abgasklappe (12), wobei das mindestens eine Anschlagelement (20) ein durch Umformen hergestellter Bestandteil des Abgasklappengehäuses (10) ist und
einer Durchgangsöffnung (18) zu der Durchführung einer Klappenwelle
wobei das Anschlagelement (20) angrenzend an die Durchgangsöffnung (18) ausgebildet ist.

2. Abgasklappengehäuse nach Anspruch 1, **dadurch gekennzeichnet, dass** das Anschlagelement (20) über einen Verbindungssteg (24) einstückig mit dem Abgasklappengehäuse verbunden ist.

3. Abgasklappengehäuse nach Anspruch 1 oder 2, **dadurch gekennzeichnet, dass** die Durchgangsöffnung (18) durch Ausstanzen hergestellt ist.

4. Abgasklappengehäuse nach einem der Ansprüche 1 - 3, **dadurch gekennzeichnet, dass** das Abgasklappengehäuse (10) zum Einsetzen in einen Abgasstrang rohrförmig ausgebildet ist.

5. Abgasklappeneinrichtung für Kraftfahrzeuge, mit
einer in einem Abgasklappengehäuse (10) nach einem der Ansprüche 1 - 4 angeordneten Abgasklappe (12), und
einer mit der Abgasklappe (12) verbundenen Klappenwelle, die in mindestens einem mit dem Abgasklappengehäuse (10) verbundenen Lagerelement gelagert ist.

## Claims

1. An exhaust flap housing, comprising
at least one stop element (20) for an exhaust flap (12), the at least one stop element (20) being a part of the exhaust flap housing (10) produced by remodeling, and
a passage opening (18) for the passage of a flap shaft,
the stop element (20) being formed adjacent to the passage opening (18).

2. The exhaust flap housing according to claim 1, **characterized in that** the stop element (20) is integrally connected with the exhaust flap housing via a connecting web (24).

3. The exhaust flap housing according to claim 1 or 2, **characterized in that** the passage opening (18) is produced by punching.

4. The exhaust flap housing according to one of claims 1 - 3, **characterized in that** the exhaust flap housing (10) has a tubular configuration for being inserted into an exhaust train.

5. An exhaust flap means for motor vehicles, comprising
an exhaust flap (12) disposed in an exhaust flap housing (10) according to one of claims 1-4, and
a flap shaft connected with the exhaust flap (12), which is supported in at least one bearing element connected with the exhaust flap housing (10).

## Revendications

1. Boîtier de clapet d'échappement, comprenant
au moins un élément de butée (20) pour un clapet d'échappement (12), le au moins un élément de butée (20) étant un composant fabriqué par formage du boîtier de clapet d'échappement (10) et
une ouverture de passage (18) pour le passage d'un axe de clapet,
l'élément de butée (20) étant réalisé de façon limitrophe à l'ouverture de passage (18).

2. Boîtier de clapet d'échappement suivant la revendication 1, **caractérisé en ce que** l'élément de butée (20) est assemblé d'une seule pièce avec le boîtier de clapet d'échappement par l'intermédiaire d'une traverse de jonction (24).

3. Boîtier de clapet d'échappement suivant l'une des revendications 1 et 2, **caractérisé en ce que** l'ouverture de passage (18) est fabriquée par découpe à la matrice.

4. Boîtier de clapet d'échappement suivant l'une des revendications 1 à 3, **caractérisé en ce que** le boîtier de clapet d'échappement (10) a une configuration tubulaire pour la mise en place d'une ligne de gaz d'échappement.

5. Dispositif de clapet d'échappement pour véhicules automobiles, comprenant
un clapet d'échappement (12) disposé dans un boîtier de clapet d'échappement (10) suivant l'une des revendications 1 à 4, et
un axe de clapet assemblé avec le clapet d'échappement (12) et logé dans au moins un élément de palier assemblé avec le boîtier de clapet d'échappement (10).
